# EUROPÄISCHE PATENTSCHRIFT

(11) **EP 1 813 483 B1**
(45) Veröffentlichungstag und Bekanntmachung des Hinweises auf die Patenterteilung: **11.03.2009**
(21) Anmeldenummer: 06025758.1
(22) Anmeldetag: 13.12.2006
(51) Int. Cl.: B60R 21/34

(54) **Kraftfahrzeug mit anhebbarer Frontklappe**
Vehicle with raisable bonnet
Véhicule avec capot soulevable

(30) Priorität: 27.01.2006 DE 102006004017
(43) Veröffentlichungstag der Anmeldung: 01.08.2007
(73) Patentinhaber: AUDI AG, 85045 Ingolstadt (DE)
(72) Erfinder: Dix, Norman, 85055 Ingolstadt (DE); Reuschel, Jens Dietmar, 85053 Ingolstadt (DE)
(74) Vertreter: Engelhardt, Harald

(56) Entgegenhaltungen:
- EP-A2- 1 153 810
- WO-A-20/04089702
- DE-A1- 10 205 626
- DE-B3-2102004 027 78
- DE-U1-8202004 014 92

## Beschreibung

Die Erfindung bezieht sich auf ein Fahrzeug mit einer in Scharnieren aufgenommen Frontklappe, einem im vorderen Frontklappenbereich angeordneten Schloss, einer Vorrichtung zum Anheben der Hinterkante der Frontklappe und einer Einrichtung zum Abdecken des bei angehobener Hinterkante entstehenden Spaltes zwischen der Frontklappe und einer sich daran nach hinten anschließenden Windschutzscheibe.

Gattungsgemäße Vorrichtungen sind in Dokumente DE 102 05 626 oder DE 20 2004 014 928 U bekannt. Es ist beispielsweise schon vorgeschlagen worden, durch einen Airbag die Fuge abzudecken, die bei einer aktiven Frontklappe entsteht, dass heißt, wenn sich die Hinterkante der Frontklappe in ihrer angehoben Stellung befindet, um einen verbesserten Fußgängerschutz zu erreichen. Es sind auch Einrichtungen bekannt, bei denen eine an der Innenseite der Frontklappe verschiebbar gelagerte Platte herausgefahren wird, wenn die Frontklappe aktiv ist. Die bekannten Einrichtungen zum Abdecken des bei angehobener Hinterkante entstehenden Spaltes zwischen der Frontklappe und der Windschutzscheibe sind insgesamt sehr aufwendig und teilweise nicht reversibel.

Der vorliegenden Erfindung liegt die Aufgabe zugrunde, eine verbesserte Einrichtung zum Abdecken des bei angehobener Frontklappen-Hinterkante entstehenden Spaltes zu schaffen, die bei größtmöglicher Zuverlässigkeit besonders kostengünstig realisierbar ist.

Die Aufgabe wird dadurch gelöst, dass die Vorrichtung zum Anheben der Hinterkante der Frontklappe mindestens einen Ausstellhebel umfasst, und dass an dem Ausstellhebel ein von diesem abragendes, flächiges Abdeckteil angeordnet ist, derart, dass es sich bei angehobener Hinterkante in den Raum zwischen der Frontklappe und der Windschutzscheibe hinein erstreckt.

Die Bewegung des Abdeckteiles erfolgt synchron mit der Anstellung der Hinterkante der Frontklappe. Durch die feste Zuordnung bzw. Anbindung an die Frontklappe wird darüber hinaus keine Sensorik und/oder zusätzliche Aktuatorik zur Bewegung des Abdeckteiles benötigt. Ein besonderer Vorteil besteht auch darin, dass die vorgeschlagene Lösung reversibel und nur durch in Augenscheinnahme kontrollierbar ist.

Die Anordnung des abragenden, flächigen Abdeckteiles an einem Ausstellhebel bzw. unmittelbar an der Frontklappe ist so getroffen, dass das Abdeckteil durch die Bewegung beim Anstellen der Hinterkante der Frontklappe zunächst nach oben durch den stets vorhandenen Spalt zwischen der Frontklappen-Hinterkante und der Windschutzscheibe bewegt wird und dann eine Schwenkbewegung ausübt, wenn die Hinterkante der Frontklappe angestellt wird. In diesem Zusammenhang ist es natürlich besonders vorteilhaft, wenn das Abdeckteil an dem Ausstellhebel festgelegt ist, da dieser meist eine größere Schwenkbewegung vollführt als die Frontklappe.

Das Abdeckteil kann in der Ausgangslage in dem bei den meisten Fahrzeugen vorhandenen Raum unter dem rückwärtigen Bereich der Frontklappe, dem so genannten Wasserkasten, angeordnet sein. Insofern wird ein ohnehin vorhandener Raum genutzt und kein oder nur ein geringfügiger zusätzlicher Bauraum benötigt.

Die Unteransprüche 2 bis 4 beinhalten vorteilhafte Ausgestaltungen der Erfindung, wobei insbesondere die Umsetzung mit einer Vorrichtung zum Anheben der Hinterkante der Frontklappe gemäß dem Unteranspruch 4 zweckmäßig ist und sich leicht umsetzen lässt.

Ein Ausführungsbeispiel der Erfindung ist in der Zeichnung dargestellt und wird nachfolgend näher beschrieben. Es zeigen
- Fig. 1: eine Vorrichtung zum Anheben der Hinterkante einer Frontklappe und eine damit in Verbindung stehende Einrichtung zum Abdecken des bei angehobener Hinterkante entstehendes Spaltes zwischen der Frontklappe und einer sich daran nach hinten anschließenden Windschutzscheibe und
- Fig. 2: die Anordnung gemäß Fig. 1 bei aktiver Frontklappe, dass heißt, wenn die Hinterkante der Frontklappe angestellt ist.

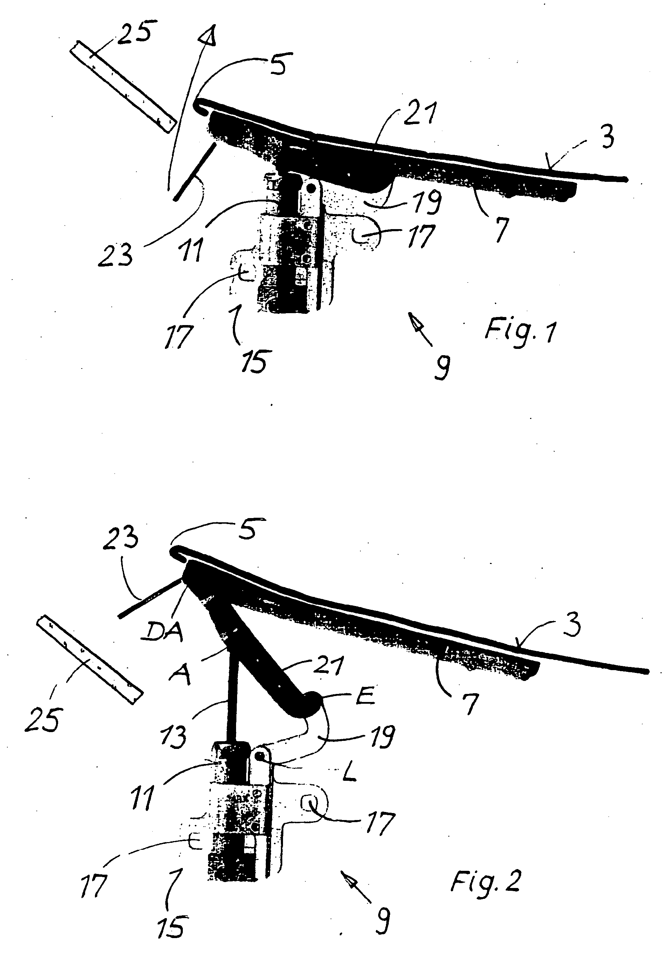

Die Fig. 1 und 2 zeigen einen Teil einer Frontklappe 3 mit einer Hinterkante 5 und einer seitlichen Verstärkung 7. Die Hinterkante 5 der Frontklappe 3 ist durch eine Vorrichtung 9 von der in Fig. 1 dargestellten Ausgangslage in eine angehobene Stellung bewegbar, in der ein verbesserter Fußgängerschutz erreicht wird (Fig. 2). In der Zeichnung ist nur eine von auf jeder Seite der Frontklappe 3 angeordneten Vorrichtung 9 gezeigt.

Die Vorrichtung 9 umfasst im Einzelnen einen Aktuator 11, dessen Kolbenstange 13 eine Linearbewegung nach oben ausführen kann. In der ausgefahrenen Stellung der Kolbenstange 13 kann diese arretiert werden, was in der Zeichnung jedoch nicht näher dargestellt ist. Der Aktuator 11 wird von einem Lagerteil 15 gehalten, welches mit Bohrungen 17 zu seiner Befestigung an der Karosserie des Fahrzeuges ausgebildet ist. Außerdem weist das Lagerteil 15 ein Festlager L auf, in dem das erste Ende eines Hebels 19 aufgenommen ist. Das zweite Ende des gekröpft ausgebildeten Hebels 19 ist über ein Gelenk E mit dem ersten Ende eines Ausstellhebels 21 verbunden.

Wie insbesondere Fig. 2 zeigt, steht das zweite Ende des Ausstellhebels 21 über ein Gelenk DA an der Verstärkung 7 der Frontklappe 3 in Verbindung. Schließlich ist zwischen den Gelenken E und DA am Ausstellhebel 21 ein Drehgelenk A vorgesehen, an dem das freie Ende der Kolbenstange 13 des Aktuators 11 angreift.

Das Gelenk DA bewegt sich beim Anheben der Hinterkante 5 der Frontklappe 3 von der Ausgangslage gemäß Fig. 1 entlang einer Kreisbahn in die in Fig. 2 gezeigte Stellung. Der Drehpunkt der Kreisbahn wird dabei durch einen Schlossbügel gebildet, welcher im vorderen Bereich der Frontklappe 3 angeordnet ist (in der Zeichnung nicht dargestellt).

Wie in den Fig. 1 und 2 deutlich zu erkennen, ist an dem Ausstellhebel 21 etwa im rechten Winkel ein flächiges Abdeckteil 23 befestigt. In der in Fig. 1 dargestellten Ausgangslage erstreckt sich das Abdeckteil 23 in den Raum unterhalb der Hinterkante 5 der Frontklappe 3 und einer sich daran anschließenden Windschutzscheibe 25.

Wird die Hinterkante 5 der Frontklappe 3 angehoben, wie dies in Fig. 2 dargestellt ist, dann wird durch das Abdeckteil 23 der Spalt zwischen der Hinterkante 5 der Frontklappe 3 und der Windschutzscheibe 25 größtenteils abgedeckt, so dass sich in dem Spalt keine Gliedmaßen eines auf die Frontklappe 3 aufschlagenden Fußgängers oder Zweiradfahrers verfangen können.

Das Abdeckteil 23 ist starr mit dem Ausstellhebel 21 verbunden. Durch die Kinematik des Ausstellhebels 21 in Verbindung mit dem Hebel 19, der Linearbewegung der Kolbenstange 13 des Aktuators 11 und den mit diesen Bauteilen in Verbindung stehenden Gelenken wird erreicht, dass zu Beginn Ausstellbewegung der Ausstellhebel 21 zunächst nach oben angehoben wird, so dass das Abdeckteil 23 ohne Kontakt mit dem unteren Rand der Windschutzscheibe 25 ebenfalls nach oben geführt wird. Erst im weiteren Bewegungsablauf erfolgt eine Schwenkbewegung des Ausstellhebels 21 und damit verbunden eine Schwenkbewegung des starr mit dem Ausstellhebel 21 verbundenen Abdeckteiles 23 in die in Fig. 2 gezeigte Position.

## Patentansprüche

1. Fahrzeug mit einer in Scharnieren aufgenommenen Frontklappe (3), einem im vorderen Frontklappenbereich angeordneten Schloss, einer Vorrichtung (9) zum Anheben der Hinterkante (5) der Frontklappe (3) und einer Einrichtung zum Abdecken des bei angehobener Hinterkante (5) entstehenden Spaltes zwischen der Frontklappe (3) und einer sich daran nach hinten anschließenden Windschutzscheibe (25), **dadurch gekennzeichnet, dass** die Vorrichtung (9) zum Anheben der Hinterkante (5) der Frontklappe (3) mindestens einen Ausstellhebel (21) umfasst, und dass an dem Ausstellhebel (21) ein von diesem abragendes, flächiges Abdeckteil (23) angeordnet ist, derart, dass es sich bei angehobener Hinterkante (5) in den Raum zwischen der Frontklappe (3) und der Windschutzscheibe (25) hinein erstreckt.

2. Fahrzeug nach Anspruch 1, **dadurch gekennzeichnet, dass** das Abdeckteil (23) starr an dem Ausstellhebel (21) befestigt ist.

3. Fahrzeug nach Anspruch 1 oder 2, **dadurch gekennzeichnet, dass** das Abdeckteil (21) aus mehreren Platten zusammengesetzt ist und sich annähernd über die gesamte Breite der Frontklappe (3) erstreckt.

4. Fahrzeug nach einem der Ansprüche 1 bis 3, **dadurch gekennzeichnet, dass** die Vorrichtung (9) zum Anheben der Hinterkante (5) der Frontklappe (3)
- einen karosseriefest angeordneten Aktuator (11) umfasst der in eine vorgegebene Richtung nach oben ausfahrbar ist,
- dass an dem Aktuator (11) ein Festlager L angeordnet ist, welches schwenkbar das erste Ende eines Hebels (19) aufnimmt,
- dass an dem zweiten Ende des Hebels (19) schwenkbar das erste Ende des Ausstellhebels (21) angeordnet ist,
- dass das zweite Ende des Ausstellhebels (21) schwenkbar mit der Frontklappe (3) verbunden ist und
- dass zwischen den Enden des Ausstellhebels (21) über ein Drehgelenk A der Aktuator (11) angreift.

## Claims

1. Vehicle with a front cover (3) held in hinges, a lock arranged in the front cover area, a device (9) for lifting the rear edge (5) of the front cover (3) and a device for covering the gap between the front cover (3) and a windscreen (25) connected to it towards the rear, which occurs when the rear edge (5) is lifted, **characterised in that** the device (9) for lifting the rear edge (5) of the front cover (3) comprises at least one pull out lever (21) and that on the pull out lever (21) a flat covering part (23) is arranged projecting from it in such a way that it extends into the area between the front cover (3) and the windscreen (25), when the rear edge (5) is lifted.

2. Vehicle according to claim 1, **characterised in that** the covering part (23) is fixed firmly to the pull out lever (21).

3. Vehicle according to claim 1 or 2, **characterised in that** the covering part (21) is made of several plates put together and extends over almost the whole width of the front cover (3).

4. Vehicle according to one of claims 1 to 3, **characterised in that** the device (9) for lifting the rear edge (5) of the front cover (3)
- comprises an actuator (11) arranged firmly on the bodywork, which can be run out upwards in a preset direction,
- that a fixed bearing L is arranged on the actuator (11), which holds the first end of a lever (19) so that it can pivot,
- that the first end of the pull out lever (21) is arranged on the second end of the lever (19) so that it can pivot,
- that the second end of the pull out lever (21) is connected to the front cover (3) so that it can pivot and
- that the actuator (11) acts through a hinge joint A between the ends of the pull out lever (21).

## Revendications

1. Véhicule avec un capot avant (3) logé dans des charnières, une serrure disposée dans la zone avant de capot avant, un dispositif (9) pour soulever l'arête arrière (5) du capot avant (3) et un dispositif pour recouvrir la fente apparue lorsque l'arête arrière (3) est soulevée entre le capot avant (3) et un pare-brise (25) s'y raccordant vers l'arrière, **caractérisé en ce que** le dispositif (9) pour soulever l'arête arrière (5) du capot avant (3) comporte au moins un levier de projection (21) et **en ce que** sur le levier de projection (21) est disposé un élément de recouvrement (23) plan, dépassant de celui-ci de sorte qu'il s'étende lorsque l'arête arrière (5) est soulevée dans l'espace entre le capot avant (3) et le pare-brise (25).

2. Véhicule selon la revendication 1, **caractérisé en ce que** l'élément de recouvrement (23) est fixé rigidement sur le levier de projection (21).

3. Véhicule selon la revendication 1 ou 2, **caractérisé en ce que** l'élément de recouvrement (21) est composé de plusieurs plaques et s'étend approximativement sur toute la largeur du capot avant (3).

4. Véhicule selon l'une quelconque des revendications 1 à 3, **caractérisé en ce que** le dispositif (9) pour soulever l'arête arrière (5) du capot avant (3) comprend
- un actionneur (11) disposé de manière fixe à la carrosserie qui peut être sorti dans un sens prescrit vers le haut, **en ce qu'**un palier fixe L est disposé sur l'actionneur (11), lequel reçoit à pivotement la première extrémité d'un levier (19),
- **en ce que** la première extrémité du levier de projection (21) est disposée à pivotement sur la seconde extrémité du levier (19),
- **en ce que** la seconde extrémité du levier de projection (21) est reliée à pivotement au capot avant (3) et
- **en ce que** l'actionneur (11) agit entre les extrémités du levier de projection (21) par le biais d'une articulation tournante A.
